# EUROPEAN PATENT APPLICATION

(11) **EP 4 297 533 A1**
(43) Date of publication of application: **27.12.2023**
(21) Application number: 22180076.6
(22) Date of filing: 21.06.2022
(51) Int. Cl.: H05B 47/105, G06T 7/00

(54) **COMPUTER-IMPLEMENTED LOGICAL GROUPING AND SCENE SELECTION OF LUMINAIRES**

(71) Applicant: Tridonic Portugal, Unipessoal Lda, 4400-676 Villa Nova de Gaia (PT)
(72) Inventor: Severinkangas, Kari, 6850 Dornbirn (AT); Silva, Carlos, 6850 Dornbirn (AT); Sousa, Antonio, 6850 Dornbirn (AT); Filipe, Jorge, 6850 Dornbirn (AT); Azevedo, João, 6850 Dornbirn (AT)
(74) Representative: Rupp, Christian

(57) **Abstract**

The present disclosure relates to the field of auto-commissioning of luminaires, in particular about an improved commissioning process. The present disclosure therefore provides a method 100 for computer-implemented logical grouping of luminaires 301 in a floor of a building 601, the method 100 comprising the steps of providing 101 a digital graphical plan 201 of a region, in particular a floor, of a building 601 with a plurality of luminaires 301 graphically represented in the plan 201, identifying 102, by automated pattern recognition, the representations of the luminaires 301 in the plan 201 as well as their respective locations, and automatically 103 grouping the identified luminaires 301.

## Description

### TECHNICAL FIELD

The present disclosure relates to the field of auto-commissioning of luminaires, in particular to an improved commissioning process. To this end, the present disclosure provides a method, a device, and a computer program for computer-implemented logical grouping of luminaires.

### BACKGROUND

In a conventional commissioning process, luminaires are identified in a building, and grouping and scene definitions are performed manually by a user or operator. This e.g., requires using a commissioning device locally in the actual luminaire installation place. In a similar way, a scene is selected manually in a commissioning app. This procedure is burdensome as the commissioning process is not automatically performed to a high extent.

### SUMMARY

In view of the above-mentioned problem, an objective of embodiments of the present disclosure is to improve the conventional commissioning process. This objective is in particular achieved by automated pattern recognition, identifying the representations of the luminaires in a graphical plan of a floor of a building, as well as the respective locations of the luminaires.

This or other objectives may be achieved by embodiments of the present disclosure as described in the enclosed independent claims. Advantageous implementations of embodiments of the present disclosure are further defined in the dependent claims.

A first aspect of the present disclosure provides a method for computer-implemented logical grouping of luminaires in a floor of a building, the method comprising the steps of: providing a digital graphical plan of a region, in particular a floor, of a building with a plurality of luminaires graphically represented in the plan, identifying, by automated pattern recognition, the representations of the luminaires in the plan as well as their respective locations, and automatically grouping the identified luminaires.

This ensures that a manual commissioning process can be effectively enhanced, as in particular grouping of luminaires on a floor of a building can be assisted by the method.

In particular, the representation of the luminaire is identified based on a luminaire bitmap.

In particular, the plan and/or the luminaire bitmap are provided in a computer readable image format.

In an implementation form of the first aspect, the grouping is a function of at least one parameter.

This ensures that the grouping can be adjusted and supported by means of several parameters.

In another implementation form of the first aspect, the parameter comprises at least one of: a distance between locations of the luminaires; a luminaire type; a building property automatically identified by pattern recognition; a predefined minimum and/or maximum group size, a group pattern, a geometrical group pattern, a learned user selection.

This ensures that several attributes of a lighting system in a building can be considered for pattern matching.

In another implementation form of the first aspect, the representations of the luminaires in the plan are determined based on a bitmap pattern.

In particular, the bitmap pattern includes a luminaire pattern.

The bitmap comprises any kind of computer readable image format.

In particular, the building property comprises a room, area or space of the building

In particular, the building property can be identified based on a bitmap pattern.

In particular, the building property can be identified using an image algorithm, e.g., a boundary following algorithm to find an isolated room area or space.

In another implementation form of the first aspect, a priority of the at least one parameter is user configurable.

This ensures that attributes of a lighting system in a building, which are e.g., more important, can be considered with user defined priority.

In another implementation form of the first aspect, the method further comprises the step of selecting, by the automated pattern recognition, a scene template corresponding to the grouping of identified luminaires.

This allows for also selecting a scene template by means of pattern recognition, which further simplifies a commissioning process.

In another implementation form of the first aspect, the scene template is selected based on at least one of: group size, luminaire type, room type.

This ensures that the scene template can be suitably selected for a lighting situation at hand.

For example, if a group size is greater than 5, scene templates X or Y are applied, if the group contains a single luminaire, scene template Z is applied.

The method may also identify objects in rooms and make decisions based on the object, which scene template to apply (e.g., if it is a meeting room, toilette, etc.)

In another implementation form of the first aspect, the scene template comprises a configuration of at least one of: light intensity, light color, light direction.

This is advantageous as light intensity, light color, light direction of a group of luminaires can be automatically assigned based on pattern matching.

In another implementation form of the first aspect, the method further comprises the step of displaying the grouping and/or the scene template selection to a user.

This ensures that a user can be informed about a result of the pattern matching.

In another implementation form of the first aspect, the method further comprises the steps of receiving user input and adapting the grouping and/or the scene template selection, based on the user input.

This ensures that a user may correct a decision of the pattern matching.

In another implementation form of the first aspect, the method further comprises the step of training the automated pattern recognition based on the received user input.

This ensures that the pattern recognition can be improved for future decisions.

In particular, the grouping and/or the scene selection capability of the automated pattern recognition is trained.

In another implementation form of the first aspect, the method further comprises the step of storing the grouping result and/or the scene template selection in a computer-readable file.

This ensures that the grouping result can be provided for future use by other devices, such as a commissioning device.

In another implementation form of the first aspect, the method further comprises the step of commissioning a luminaire, based on the computer readable file.

A second aspect of the present disclosure provides a device for computer-implemented logical grouping of luminaires in a floor of a building, wherein the device is configured to provide a digital graphical plan of a region, in particular a floor, of a building with a plurality of luminaires graphically represented in the plan, identify, by automated pattern recognition, the representations of the luminaires in the plan as well as their respective locations, and automatically group the identified luminaires.

In particular, the device is a commissioning device.

In an implementation form of the second aspect, the grouping is a function of at least one parameter.

In another implementation form of the second aspect, the parameter comprises at least one of: a distance between locations of the luminaires; a luminaire type; a building property automatically identified by pattern recognition; a predefined minimum and/or maximum group size, a group pattern, a geometrical group pattern, a learned user selection.

In another implementation form of the second aspect, the device is configured to determine the representations of the luminaires in the plan based on a bitmap pattern.

In another implementation form of the second aspect, a priority of the at least one parameter is user configurable.

In another implementation form of the second aspect, the device is further configured to select, by the automated pattern recognition, a scene template corresponding to the grouping of identified luminaires.

In another implementation form of the second aspect, the scene template is selected based on at least one of: group size, luminaire type, room type.

In another implementation form of the second aspect, the scene template comprises a configuration of at least one of: light intensity, light color, light direction.

In another implementation form of the second aspect, the device is further configured to display the grouping and/or the scene template selection to a user.

In another implementation form of the second aspect, the device is further configured to receive user input and adapt the grouping and/or the scene template selection, based on the user input.

In another implementation form of the second aspect, the device is further configured to train the automated pattern recognition based on the received user input.

In another implementation form of the second aspect, the device is further configured to store the grouping result and/or the scene template selection in a computer-readable file.

In another implementation form of the second aspect, the device is further configured to commission a luminaire, based on the computer readable file.

The second aspect and its implementation forms provide the same advantages as the first aspect and its implementation forms, respectively.

A third aspect of the present invention provides a computer program comprising instructions which, when the program is executed by a computer, cause the computer to perform the method according to the first aspect or any of its implementation forms.

The third aspect and its implementation forms provide the same advantages as the first aspect and its implementation forms, respectively.

### BRIEF DESCRIPTION OF DRAWINGS

In the following, the invention is described exemplarily with reference to the enclosed figures, in which
- FIG. 1: shows a schematic view of a method according to an embodiment of the present disclosure;
- FIG. 2: shows a schematic view of an operating scenario according to the present disclosure;
- FIG. 3: shows a schematic view of grouping of luminaires according to the present disclosure;
- FIG. 4: shows another schematic view of grouping of luminaires according to the present disclosure;
- FIG. 5: shows yet another schematic view of grouping of luminaires according to the present disclosure;
- FIG. 6: shows a schematic view of grouping of luminaires and scene selection according to the present disclosure;
- FIG. 7: shows another schematic view of grouping of luminaires and scene selection according to the present disclosure;
- FIG. 8: shows yet another schematic view of grouping of luminaires and scene selection according to the present disclosure;
- FIG. 9: shows yet another schematic view of grouping of luminaires and scene selection according to the present disclosure;
- FIG. 10: shows yet another schematic view of grouping of luminaires and scene selection according to the present disclosure;
- FIG. 11: shows a schematic view of user input via a user interface according to the present disclosure;
- FIG. 12: shows another schematic view of user input via a user interface and group selection according to the present disclosure;
- FIG. 13: shows another schematic view of an output of a user interface according to the present disclosure;
- FIG. 14: shows another schematic view of user input via a user interface and group selection according to the present disclosure; and
- FIG. 15: shows another schematic view of an output of a user interface according to the present disclosure.

### DETAILED DESCRIPTION OF PREFERRED EMBODIMENTS

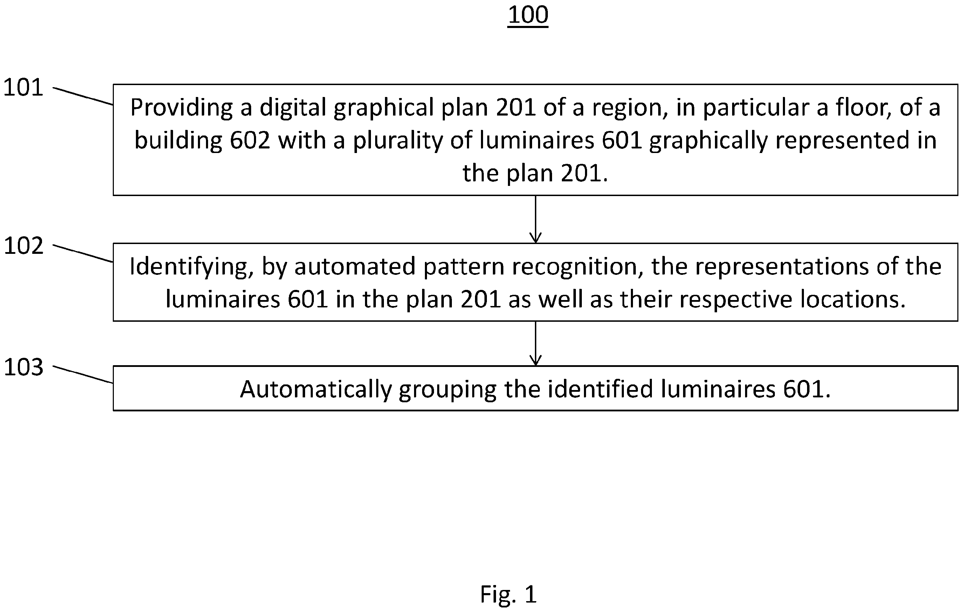

FIG. 1 shows a method 100 for computer-implemented logical grouping of luminaires 301. The luminaires are e.g., arranged in a floor of a building 601. The method 100 comprises a first step of providing 101 a digital graphical plan 201 of a region of a building 601. The region e.g., may comprise a floor of a building. A plurality of luminaires 301 are graphically represented in the plan 201. The method 100 comprises a second step of identifying 102, by automated pattern recognition, the representations of the luminaires 301 in the plan 201 as well as their respective locations. The method 100 further comprises a third step of automatically 103 grouping the identified luminaires 301.

In other words, the idea of the present disclosure is that, starting from a digital floor plan 201, automated or assisted grouping and optionally also scene definition can be performed by a computer program.

The present disclosure allows for defining groups of luminaires 301 from an analysis of the floor plan201. Thus, by reading and analyzing the floor plan 201, the relative positions of each luminaire 301 and different types of luminaires 301 can be identified, if such information is available in the floor plan 201. The floor plan may be of any type, thus, a simple image (e.g., bitmap, top view) is sufficient. Distances between the luminaires 301 can be determined by image processing performed on the floor plan 201.

Identification of the luminaire types might be performed based on different icons that are used in the representation for each type of luminaire. In other words, representations of the luminaires 301in the plan 201 can be determined based on a bitmap pattern.

Information on the distribution and arrangement of different luminaires 301 as well as different types can be used to perform automated grouping. This e.g., includes applying at least one rule for dividing an overall set of the luminaires into groups and associating a luminaire to a particular group. For example, a group may have only a maximum number of luminaires, a group may include only luminaires of the same type, and so on. Even a combination of different such rules may be applied. Another requirement might be that all luminaires 301 of a same group may be in the same room. Thus, the floor plan 201 may be analyzed even with respect to characteristics that are not directly associated with the luminaires, such as rooms of different types (meeting room, toilet, kitchen, lobby, reception...).

In other words, the grouping optionally is a function of at least one parameter. This parameter optionally may comprise at least one of: a distance between locations of the luminaires 301; a luminaire type; a building 601 property automatically identified by pattern recognition; a predefined minimum and/or maximum group size, a group pattern, a geometrical group pattern, a learned user selection. Further optionally, a priority of the at least one parameter is user configurable.

After an automated grouping has been executed, the user or operator may review the grouping result and adapt the groups by changing the association of one or more luminaires to the groups.

That is, to enable reviewing by the user, the method 100 further comprises the optional step of displaying a grouping and/or a scene template selection to a user. The method 100 also may comprise receiving user input and adapting the grouping and/or the scene template selection, based on the user input.

It may also be the case that the method 100 cannot identify a luminaire 301 belonging to a specific group and the respective luminaire 301 is left over after the grouping has been completed. These leftovers may then manually be added to a group.

The method 100 may optionally be able to learn from user corrections that are applied to the result of the automated grouping process. Thus, for a future automated grouping process, the corrections that have been performed by a user may be considered, additionally. In addition to the rules known in advance, these corrections can be used to generate additional rules which are also stored so that they can be retrieved for future analysis of another floor plan 201. In other words, the method 100 further comprises the step of training the automated pattern recognition based on the received user input.

Once the grouping is completed, scenes (e.g., scene templates) can be associated and established for each group. Basically, the approach of automatically selecting a specific scene template corresponds to the automated grouping process: This means that predefined rules may be applied to the luminaires 301 of all different groups with an opportunity for the user to correct the result of the automated process. In other words, the method 100 further includes selecting, by the automated pattern recognition, a scene template corresponding to the grouping of identified luminaires 301.

A scene template e.g., can be selected based on at least one of: group size, luminaire type, room type. The scene template may comprise a configuration of at least one of: light intensity, light color, light direction. This configuration may be applied to at least one of the luminaires 301.

Then, the resulting groups and the optionally defined scenes can be stored, for example in a cloud or in any other storage means accessible during the commissioning process. In other words, the method 100 optionally includes storing the grouping result and/or the scene template selection in a computer-readable file. This information can then be retrieved in a commissioning process, so that a luminaire 301 can automatically be added to a specific group by transmitting the information stored as a result of the automated analysis of the floor plan 201. For system setup also the definitions of the scenes can be transferred to the respective building infrastructure. In other words, the method 100 comprises commissioning a luminaire, based on the computer readable file.

During the process of grouping and optionally also in the process of scene template definition it may be that suggestions made by the application include a probability value that the result of the grouping process or the scene association is correct or a percentage that the applied rules are fulfilled. This is particularly useful in case in that the groups are generated based on a user input which defines certain luminaires 301 as a group and based on this input, the method 100 then automatically tries to identify similar groups, for example all luminaires 301 in an area defined by a certain size and shape. So, after grouping is performed by the program generating a group for a similar area, the result is presented to a user together with a matching probability indicating to the user that the identified group may deviate to a certain extent. The threshold for identifying a similar group may be adjustable.

The user can identify a group in the floor plan by adding certain luminaires or types of luminaires to a group. This will then be considered as a template by the method 100 and the program is able to search for similar groups based on this user input. In addition, the program be able to identify different objects or rooms from the floor plan 201, which might have an influence on the finally established scenes. For example, a toilet and a table or a flip-chart in a conference room may require different scene generation. In case that the floor plan includes information that can be analyzed, this may be taken into consideration when the template for the scene is applied.

This automated process might be interactive with a user who is given the opportunity to reconfigure the grouping as well as the scene definitions after respective suggestion made by the program.

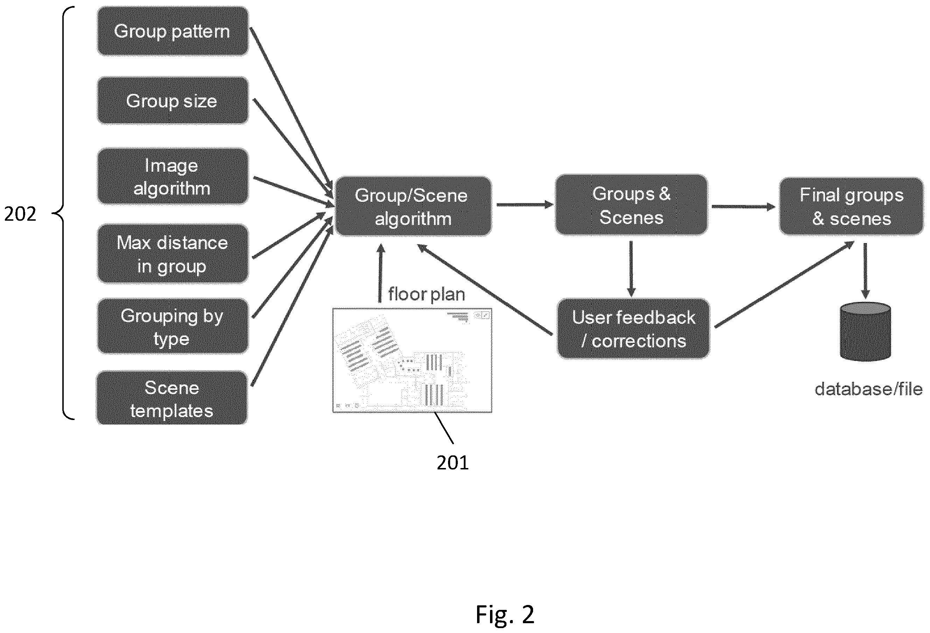

FIG. 2 shows input and output of the method 100 described above. On the left hand side, input such as the at least one parameter 202 and other parameters or functions are shown. FIG. 2 also illustrated the floor plan 201, that is, the digital graphical plan, which may be provided as an image file. FIG. 2 also shows output of the method 100, such as groups and scene templates which can be applied to the luminaires 301. The scene templates may be applied automatically to the luminaires, depending on a scene template configuration. User corrections may also serve as an input to the method 100. The output of the method 100 may then be saved as a computer readable file, e.g., in a storage or a database.

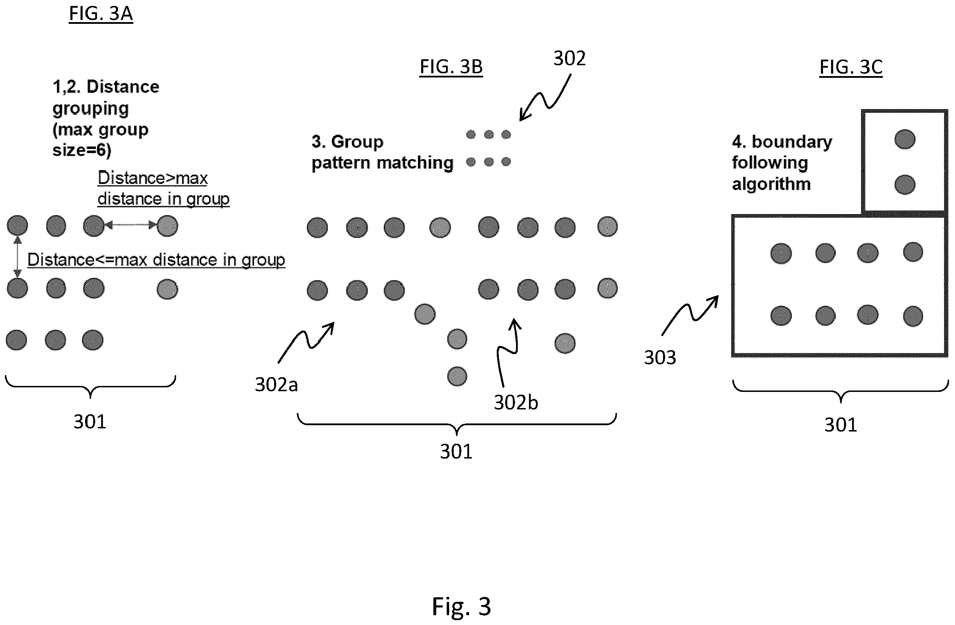

FIG. 3 shows examples of grouping of luminaires 301. In particular, FIG. 3A shows grouping based on a maximum distance inside a group, between the luminaires 301 of the group. That is, once a distance between luminaires 301 exceeds a maximum distance of luminaires 301 in a group, the respective luminaire 301 does not belong to the group.

Moreover, if a maximum group size is exceeded, a luminaire 301 may be regarded not belonging to a group. In FIG. 3A an exemplary maximum group size is 6.

FIG. 3B shows grouping based on group patterns. Once a pattern 302 is detected among multiple luminaires 301, a group 302a or a group 302b can be determined based on said pattern 302.

FIG. 3C shows grouping based on a boundary following algorithm. The boundary following algorithm (e.g., a selected image algorithm) can be used to detect rooms 303 in a building 601.

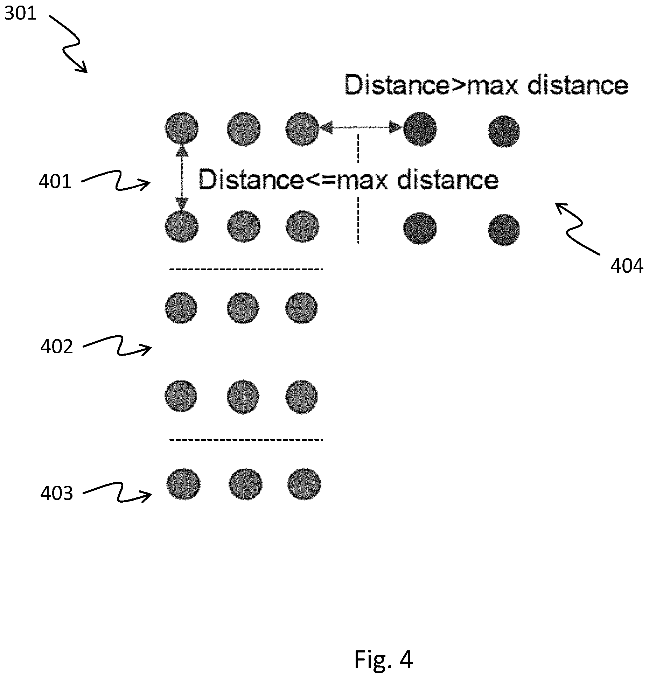

FIG. 4 shows grouping based on a distance between luminaires 301 and a group size in more detail. In FIG. 4, max distance grouping is combined with a group size of 6. In the example shown in FIG. 4, the method 100 divides the same type of luminaires 301 in groups of six. Two groups 401 and 402 are formed. Optionally, a user may need to confirm if the rest of the groups 403, 404 with less luminaires 301 are valid for the installation.

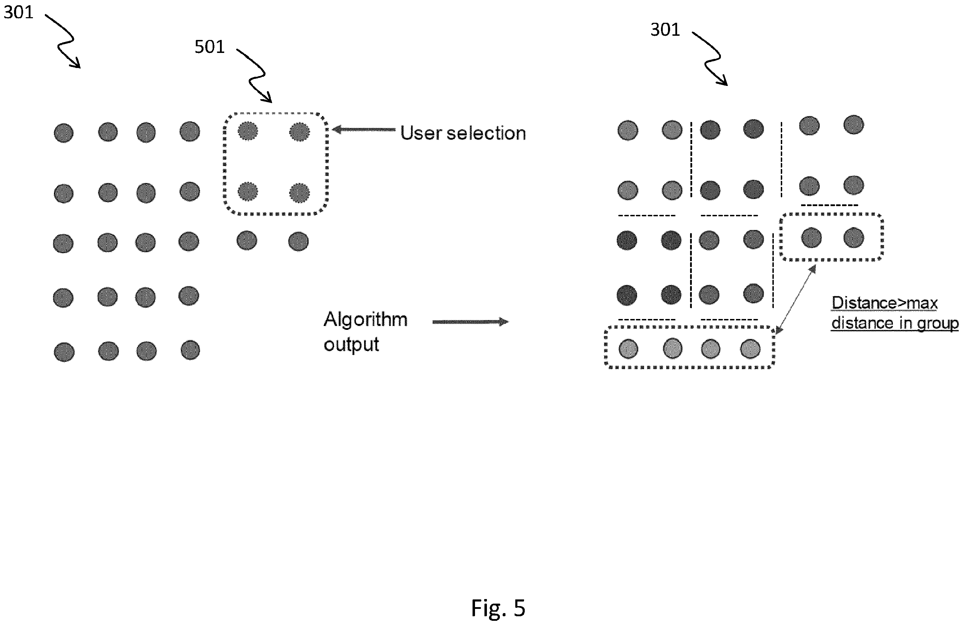

FIG. 5 shows grouping based on a group pattern and partly based on group size and distance. As illustrated on the left hand side in the figure, a user may select a group 501 of luminaires on a floor plan 201 to indicate how groups should be formed. As illustrated on the right, the method 100 forms seven different groups of four luminaires 301 (separated by dashed lines). Two left-over groups are formed as they do not fulfill the group pattern input (and e.g., a maximum distance passed). A user may confirm if these two groups are valid.

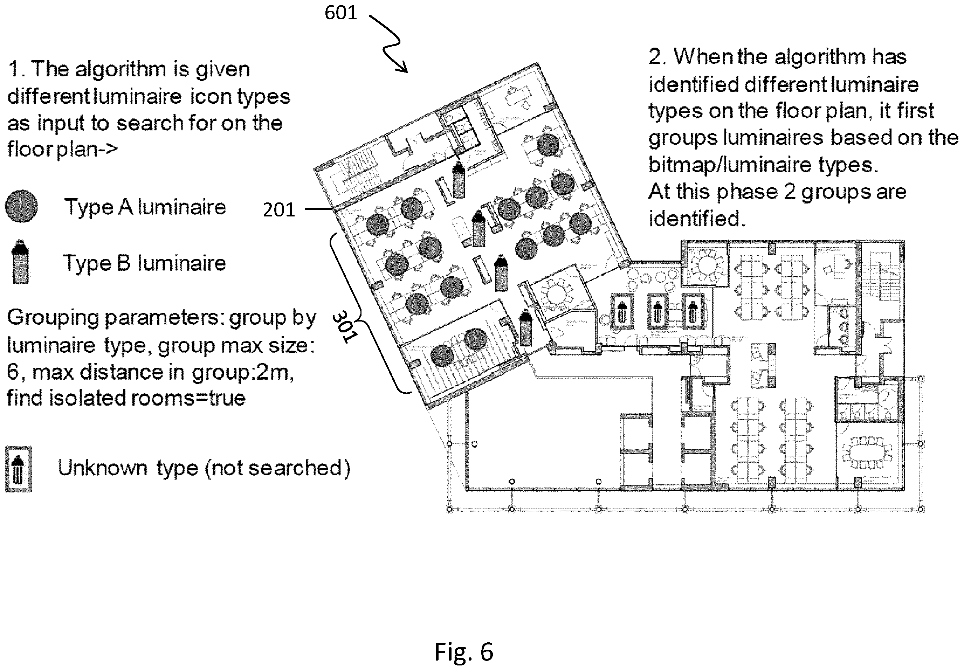

FIG. 6 shows another example of grouping and scene selection as e.g., performed by the method 100. As illustrated, the method 100 may receive different luminaire icon types (e.g., Type A or Type B) as input to search for on the floor plan 201 (that is, the plan of a building 601). The method 100 can be instructed to use the following grouping parameters 202: group by luminaire type, group max size: 6, max distance in group: 2m, find isolated rooms=true. The method 100 may find unknown luminaire types, which are used for grouping. When the method 100 has identified different luminaire types on the floor plan 201, it first groups luminaires 301 based on the bitmap or luminaire types. In the example of FIG. 6, two groups of luminaires are identified (one group comprising type A luminaires and one group comprising type B luminaires).

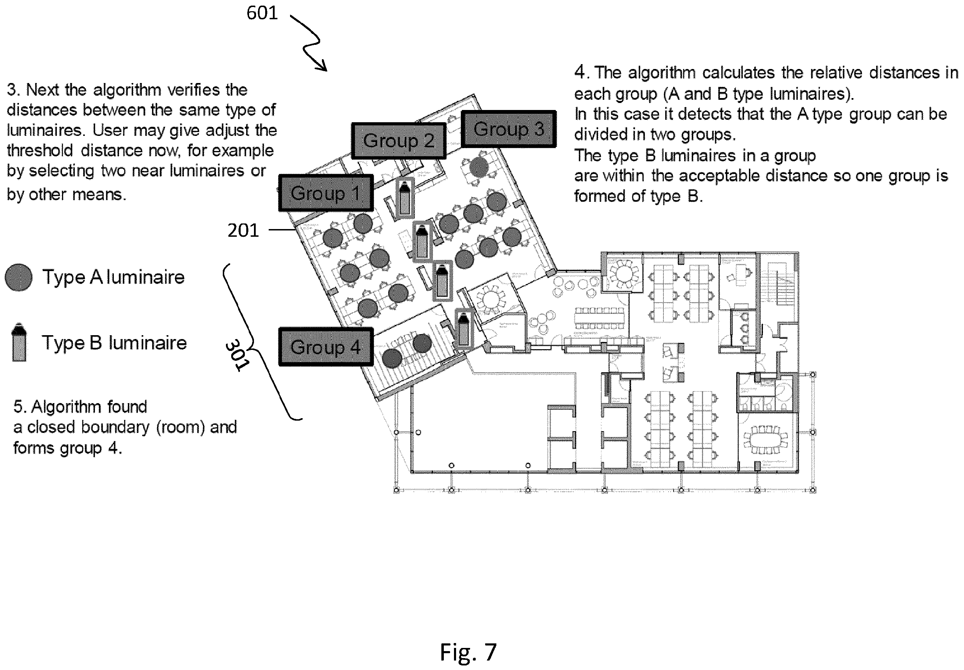

FIG. 7 continues the example of FIG. 6 by further detailing the grouping of luminaires based on distance and group size. As shown in FIG. 7, the method 100 verifies the distances between the same type of luminaires 301. A user may adjust the threshold distance, for example by selecting two near luminaires or by other means. The method 100 may calculate the relative distances in each of the two groups (A and B type luminaire groups). In this case it detects that the A type group can be divided into two more groups (labelled with "Group 1" and "Group 3" in FIG. 7). The type B luminaires in a group are within the acceptable distance so one group is formed for type B (labelled with "Group 2"). As further illustrated, the method 100 found a closed boundary room and forms "Group 4".

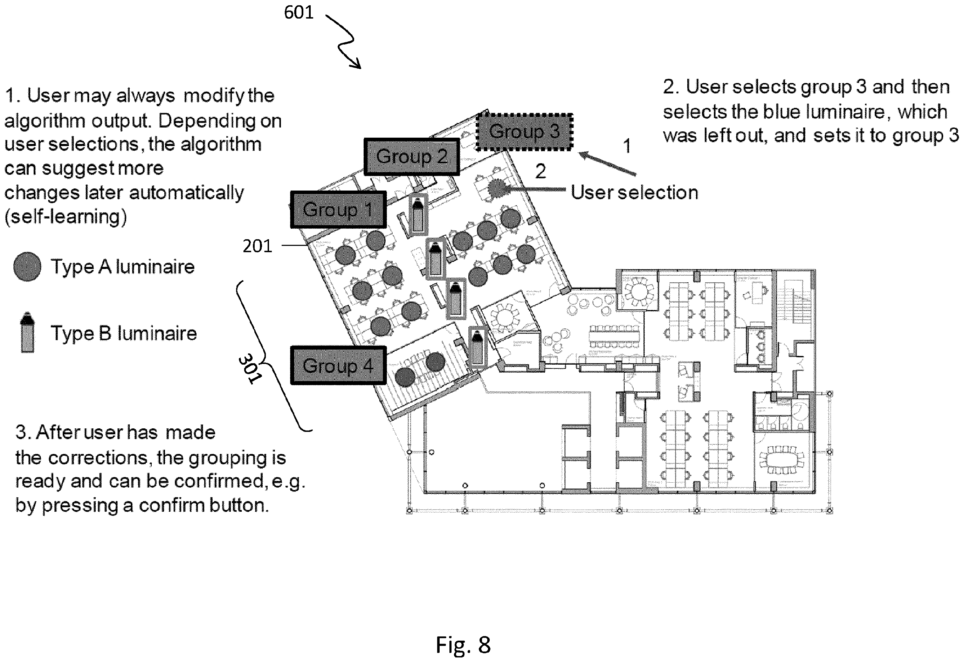

FIG. 8 shows how a user may modify the output of the method 100 as described in FIG. 7. Depending on user selections, the method 100 automatically can suggest more changes later (the method 100 may be self-learning). As shown in the example, the user may select "Group 3" and then select a luminaire which was left out and adds it to "Group 3". After the user has made the corrections, the grouping is ready and can be confirmed, e.g., by pressing a confirm button.

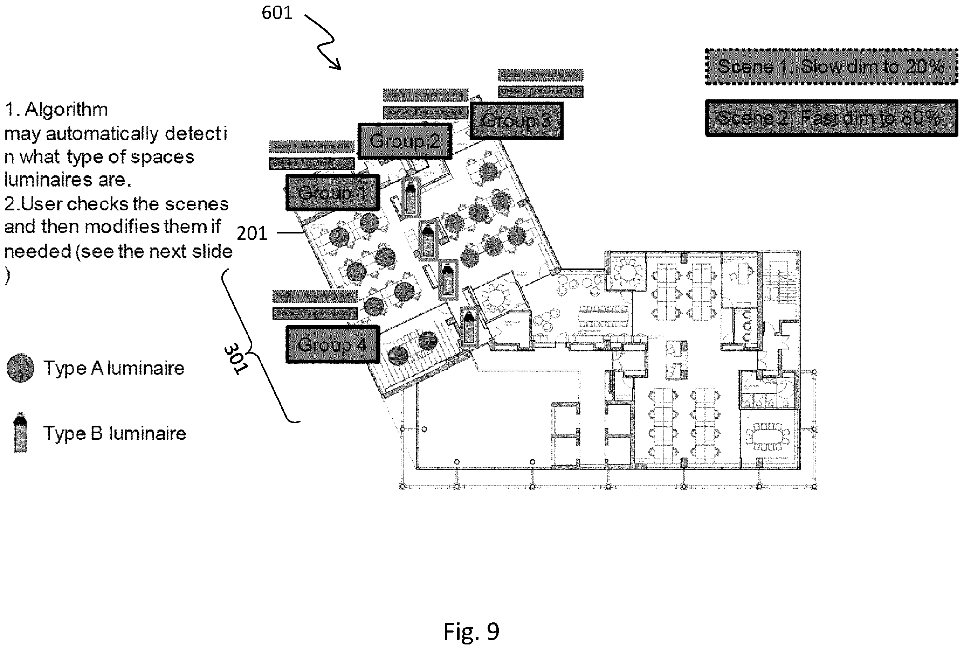

FIG. 9 illustrates how scene templates can be applied automatically. The method 100 may automatically detect in what type of places luminaires 301 are located and suggest scene templates, accordingly. A user then may check the scenes and modify them, if needed. In FIG. 9, scene template 1 (which configures the luminaires 301 to slow dim to 20%) and scene template 2 (which configures the luminaires 301 to fast dim to 80%) are suggested.

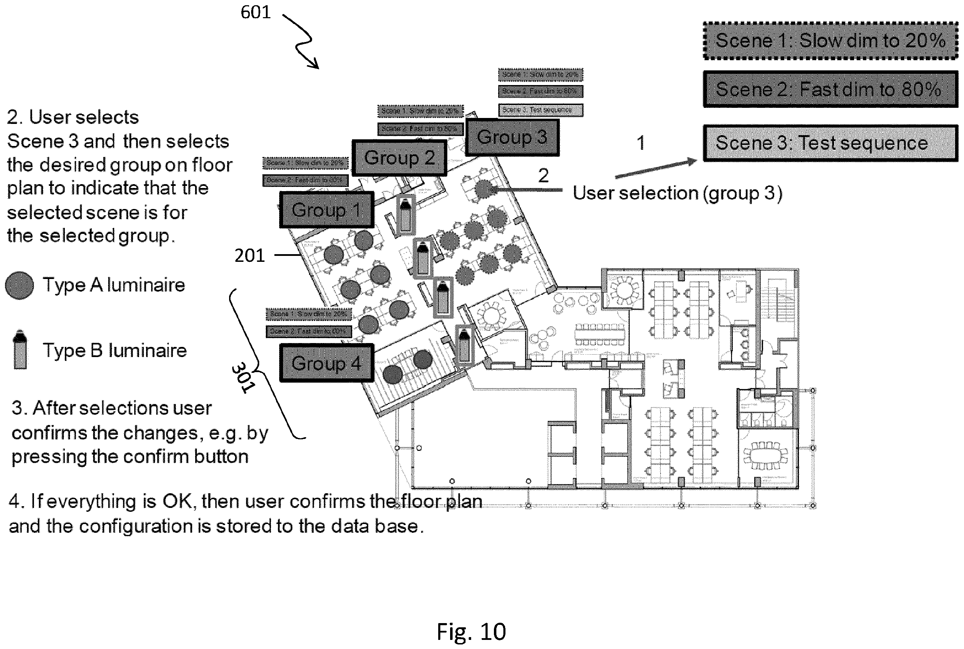

Continuing the example of FIG. 9, FIG. 10 shows how a user selects scene template "Scene 3" and then selects the desired group on the floor plan 201 to indicate that the selected scene is for the selected group. After the selection, the user confirms the changes, e.g., by pressing a confirm button. If everything is OK, the user confirms the floor plan 201 and the configuration is stored to the data base. That is, the grouping result and/or the scene template selection is stored in a computer-readable file.

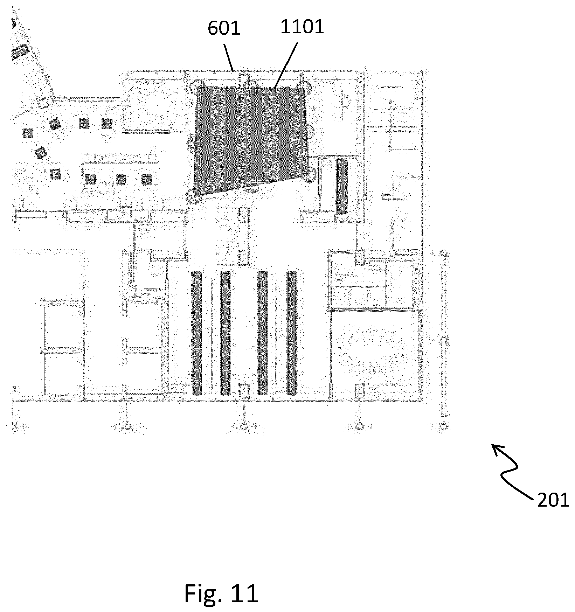

FIG. 11 illustrates how a user may use a visual tool for selecting a group 1101 of luminaires on a floor plan 201 of a building 601. The user may add additional parameters for the selection. For example, such parameters may include to search an identical luminaire pattern as a selected one; to search any pattern, but with the number of luminaires as selected, or to search similar luminaires as selected (similar shape or type).

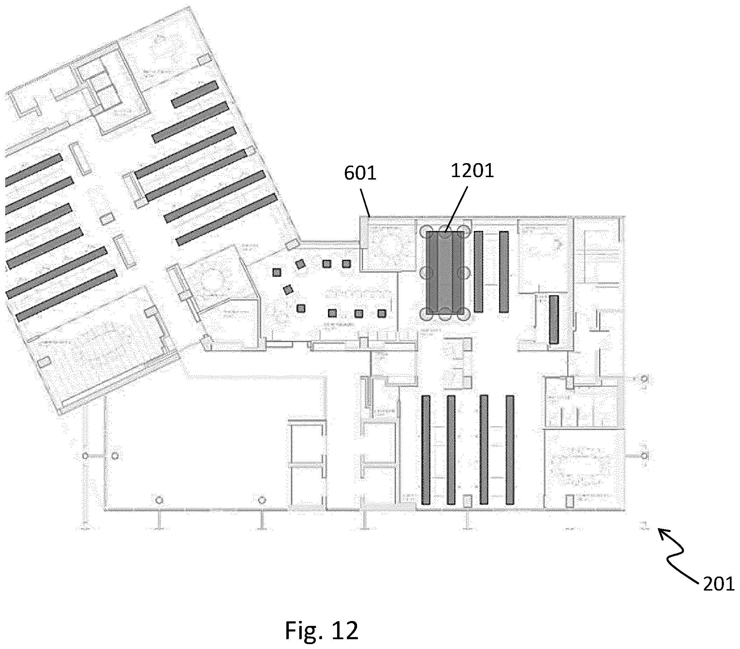

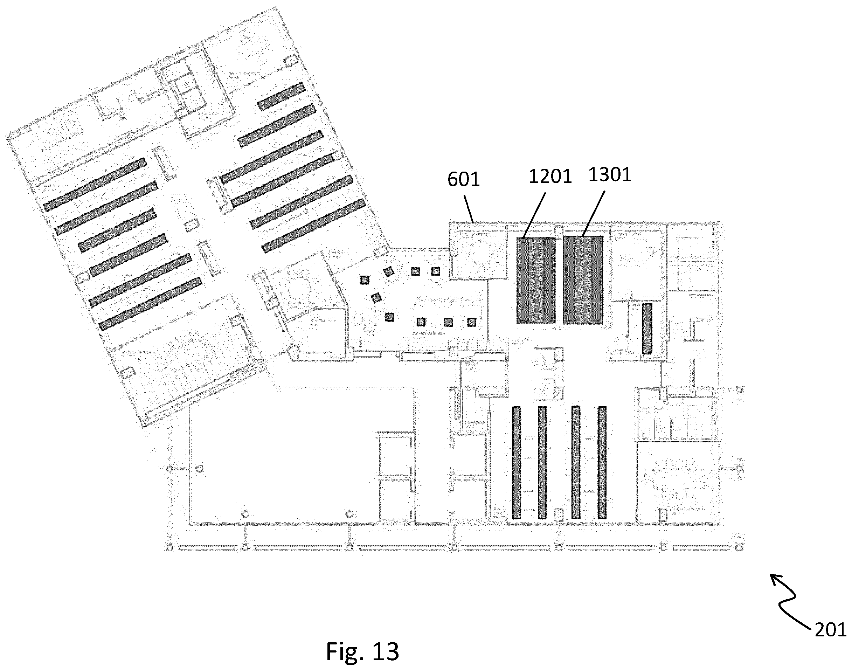

As shown in FIG. 12, to this end, the user may select a group 1201 of devices on a floor plan 201 and press a search groups button. The method 100 may search an identical luminaire pattern as selected. The method 100 may also find groups with X % match, e.g., 80% match of a bitmap pattern. As shown in FIG. 13, the method 100 shows groups 1301 identical to the selected group 1201. These two groups are identical, however, the method 100 may also show similar groups. If the selection is ok, the user can confirm the groups.

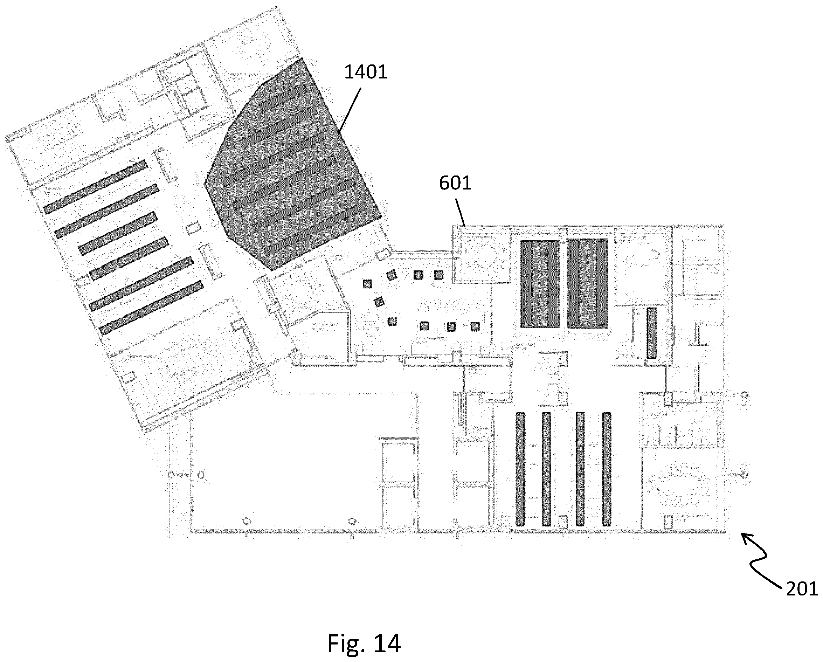

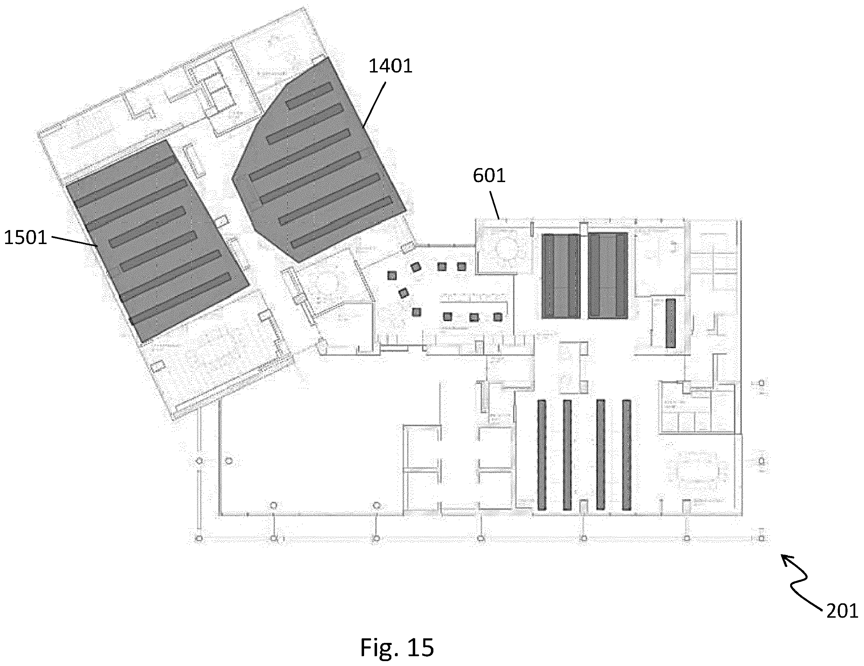

As shown in FIG. 14, a user can select a bigger group 1401 of luminaires. There is no identical group on the floor plan 201, as the method 100 is instructed to operate a max distance algorithm between luminaires in groups. The user may then tell to find a group with a same number of devices, instead. As shown in FIG. 15, the found group 1501 fulfills the user requirement.

## Claims

1. A method (100) for computer-implemented logical grouping of luminaires (301) in a floor of a building (601), the method (100) comprising the steps of:
- providing (101) a digital graphical plan (201) of a region, in particular a floor, of a building (601) with a plurality of luminaires (301) graphically represented in the plan (201),
- identifying (102), by automated pattern recognition, the representations of the luminaires (301) in the plan (201) as well as their respective locations, and
- automatically (103) grouping the identified luminaires (301).

2. The method (100) according to claim 1, wherein the grouping is a function of at least one parameter (202).

3. The method (100) according to claim 2, wherein the parameter (202) comprises at least one of: a distance between locations of the luminaires (301); a luminaire type; a building (601) property automatically identified by pattern recognition; a predefined minimum and/or maximum group size, a group pattern, a geometrical group pattern, a learned user selection.

4. The method (100) according to any one of the preceding claims, wherein the representations of the luminaires (301) in the plan (201) are determined based on a bitmap pattern.

5. The method (100) according to any one of the preceding claims, wherein a priority of the at least one parameter is user configurable.

6. The method (100) according to any one of the preceding claims, further comprising the step of selecting, by the automated pattern recognition, a scene template corresponding to the grouping of identified luminaires (301).

7. The method (100) according to claim 6, wherein the scene template is selected based on at least one of: group size, luminaire type, room type.

8. The method (100) according to any one of the preceding claims, wherein the scene template comprises a configuration of at least one of: light intensity, light color, light direction.

9. The method (100) according to any one of the preceding claims, further comprising the step of displaying the grouping and/or the scene template selection to a user.

10. The method (100) according to any one of the preceding claims, further comprising the steps of receiving user input and adapting the grouping and/or the scene template selection, based on the user input.

11. The method (100) according to any one of the preceding claims, further comprising the step of training the automated pattern recognition based on the received user input.

12. The method (100) according to any one of the preceding claims, further comprising the step of storing the grouping result and/or the scene template selection in a computer-readable file.

13. The method (100) according to claim 11, further comprising the step of commissioning a luminaire, based on the computer readable file.

14. A computer program comprising instructions which, when the program is executed by a computer, cause the computer to perform the method according to any one of claims 1 to 13.

15. A device for computer-implemented logical grouping of luminaires in a floor of a building, wherein the device is configured to:
- provide a digital graphical plan (201) of a region, in particular a floor, of a building (601) with a plurality of luminaires (301) graphically represented in the plan (201),
- identify, by automated pattern recognition, the representations of the luminaires (301) in the plan (201) as well as their respective locations, and
- automatically (103) group the identified luminaires (301).
